# EUROPEAN PATENT APPLICATION

(11) **EP 4 465 015 A1**
(43) Date of publication of application: **20.11.2024**
(21) Application number: 22927497.2
(22) Date of filing: 15.08.2022
(51) Int. Cl.: G01N 9/02, G21C 17/06

(54) **APPARATUS FOR CHECKING THE DENSITY OF CYLINDRICAL ARTICLES**

(30) Priority: 15.02.2022 RU 2022104080
(71) Applicant: Joint-Stock Company "Machinery Manufacturing Plant", Moscow region, g. Elektrostal, 144001 (RU)
(72) Inventor: GERASIMOV, Igor' Anatol'evich, Moskovskaya obl. g. Elektrostal', 144009 (RU); ZAJCEV, Mihail Yur'evich, Moskovskaya obl., g. Elektrostal', 144000 (RU); SOBOLEV, Viktor Yakovlevich, Moskovskaya obl., g. Elektrostal', 144009 (RU); ULIZKO, Sergej Viktorovich, Moskovskaya obl., g. Elektrostal', 144009 (RU); SHUL'MAN, Yurij Semenovich, Moskovskaya obl., g. Elektrostal', 144009 (RU)
(74) Representative: Yalçiner Patent and Consulting Ltd.
(86) International application number: PCT/RU2022/000254
(87) International publication number: WO 2023/158336

(57) **Abstract**

The invention can be used for checking the density of nuclear fuel pellets in an automatic density calculation mode and transmitting the measuring results to a database. The claimed device comprises, arranged in succession, an article loading unit, an article volume measuring unit, an article mass measuring unit, and an article unloading unit. The article loading unit comprises an entry collector and a gate that opens to admit an article into the volume measuring unit. The article volume measuring unit comprises a differential pressure transducer having two cavities, one of which is connected to a measuring chamber into which the article to be checked is loaded, and the other of which is connected to a reference chamber permanently containing a reference article. Each chamber is provided with a valve for opening and closing an entrance to the corresponding cavity of the differential pressure transducer. The article mass measuring unit comprises a weighing device with a platform for receiving articles. The article unloading device comprises a device for expelling an article, and an exit collector into which the weighed articles are released.

## Description

### TECHNICAL FIELD

The invention relates to the nuclear industry, namely to devices for checking structure of nuclear fuel pellets for fuel elements (fuel rods), and can be used for checking density of nuclear fuel pellets.

### BACKGROUND

Normally, in order to ensure long-term and safe operation of a nuclear reactor, it is necessary to equip fuel elements (fuel rods) with fuel pellets with parameters that meet the requirements of state standards GOST and TS. One of these parameters is density of nuclear fuel pellets. A large dispersion in the density of fuel pellets leads to uneven loading of uranium along the length of the fuel rod and, consequently, to uneven heating along the length of the fuel rod, and at high density, the fuel pellet has increased fragility, which can lead to its cracking. The above factors affect the reliability, duration and safety of nuclear fuel operation in the reactor.

A known method for measuring the density is performed by determining a mass of a substance to be checked and placing it in a measuring container, reducing its volume and measuring the pressure change in the measuring container before and after placing the checked substance therein, while the volume of the measuring container is changed by a value proportional to the mass of the substance. A volume of a hermetically sealed measuring container containing no measured material is additionally changed by a fixed value. Then the pressure change is measured, ratio of the obtained pressure change to the pressure change before and after placing the measured material in the measuring container is determined, and the density is inferred by the difference in these ratios (RU 2540247 publ. 10.02.2015).

Disadvantage of this method is that the measurement of body volume should be performed when measuring the pressure both in an empty container and in a container with a body, and the volume calculation is performed manually. In addition, this method is most applicable for measuring density of bodies having large dimensions.

A method for determining density of solids is known, comprising weighing the test body placed in a measuring cuvette, wherein the weighing operation is carried out in a working fluid in an air bubble, first at normal pressure, then at low pressure, after which the cuvette is emptied of the tested body, filled with the working fluid and weight of the cuvette in the working fluid is determined. Calculation of density is carried out according to a formula (RU 2203480, publ. 27.04.2003).

Disadvantages of this method are that all operations for transferring the articles are performed manually, visual inspection of the measurements is required, as well as the use of liquid prepared from special solutions using distilled water, and a need for constant monitoring of the liquid temperature. All this greatly complicates the measurement process.

A device for checking density of nuclear fuel pellets is known, comprising a measuring unit including a gamma radiation source and a detection unit, a transport device for moving pellets and a press heel, as well as a unit for controlling and processing the measurement results, designed to control the operation of the transport device, for processing the measurement results and rejection of pellets. The transport mechanism for moving tablets includes a rotation mechanism designed to immobilize, rotate and sort pellets. Pellets from a loading unit are fed individually into the checking zone to the shafts of the rotation mechanism, the pellet is pressed with its heel to the measuring prism, illuminated by gamma radiation flux, which is recorded by the detection unit. The rotation mechanism rotates the pellet twice by 120 degrees and the measurement is repeated. The average value of three measurements for one pellet is taken as the measurement result (RU 2209477, publ. 27.07.2003).

Disadvantage of this known device is its low performance due to a single delivery of pellets to the measurement zone. They are not suitable for continuous testing and are used only for selective testing of the density of nuclear fuel pellets.

A device for checking density of nuclear fuel pellets is known, comprising a measuring unit including a gamma radiation source and a detection unit, a transport mechanism for moving the pellets, and a pressing device, as well as a unit for controlling and processing the measurement results, designed to control the operation of the transport mechanism, for processing the measurement results and rejection of pellets. The transport mechanism includes the first transport unit for moving the initial and output pallets for the pellet stacks in the transverse direction, the second transport unit for moving the stack through the measuring unit from the initial to the output pallet, and the pressing device is configured to press the pellets when moving the stack through the measuring unit. (RU 2458416, publ. 10.08.2012).

Disadvantage of this unit is the presence of sources of ionizing radiation, which require installation of protective screens to protect people from radiation and a large error in measuring density.

A geometric method for determining density of solids is known (Vodzhailo E.G., Kozhokar M.Yu. "PHYSICS. Determination of density of solids by their geometric dimensions and mass" St. Petersburg. 2016, 30). In this method, using a caliper or micrometer, geometric dimensions of a body are measured, and its volume is calculated from these dimensions, then the body is weighed on scales, and the body density is obtained by dividing mass by volume.

Disadvantage of this method is the need to perform a large number of measurements, mathematical calculations and the ability to determine density of only those solids that have a regular geometric shape.

### DISCLOSURE OF THE INVENTION

The objectives of the invention are:
- automation of the technological process of monitoring density of each cylindrical article (fuel pellet) in a fuel pellet stack;
- elimination of the "human factor" influence to the process of checking density of cylindrical articles;
- elimination of the need to use sources of ionizing radiation, which require installation of special protective equipment;
- ensuring desired performance in the process of checking density of cylindrical articles;
- elimination of the need to introduce conversion factors that adjust for non-linear dimensions of the articles;
- automation of the process of forming, collecting, and transmitting results of measuring density of articles.

The technical result of the claimed invention is an automated, operational, highly reliable, eliminating the human factor process for checking density of cylindrical articles with a mode of automatic density calculation and transfer of measurement results to a database.

This technical result is achieved by a device for checking density of cylindrical articles comprising, arranged in succession, an article loading unit, an article volume measuring unit, an article mass measuring unit, and an article unloading unit.

The article loading unit comprises an entry collector and a gate that opens to admit an article into the volume measuring unit. The article volume measuring unit comprises a differential pressure transducer having two cavities, one of which is connected to a measuring chamber into which the article to be checked is loaded, and the other of which is connected to a reference chamber permanently containing a reference article. Each chamber is provided with a valve for opening and closing an entrance to the corresponding cavity of the differential pressure transducer. The article mass measuring unit comprises a weighing device with a platform for receiving articles. The article unloading unit comprises a device for expelling an article, and an exit collector into which the weighed articles are released.

The articles enter from the loading unit to the volume measuring unit via a cradle using a linear-turning mechanism. The valves in the article volume measuring unit are magnetic and controlled by a pneumatic cylinder. The articles pass from the volume measuring unit to the article mass measuring unit via a cradle using a lever-turning mechanism. The apparatus comprises high-precision electronic scales as a weighing device. The device for expelling articles is a pneumatic cylinder with a lever mounted on its rod. The entry collector is a container into which the articles are loaded before the check, and the exit collector is a container into which the checked articles get after the check. The apparatus comprises a controller operating as a data management and processing system.

### BRIEF DESCRIPTION OF DRAWINGS

The invention is illustrated by drawings.

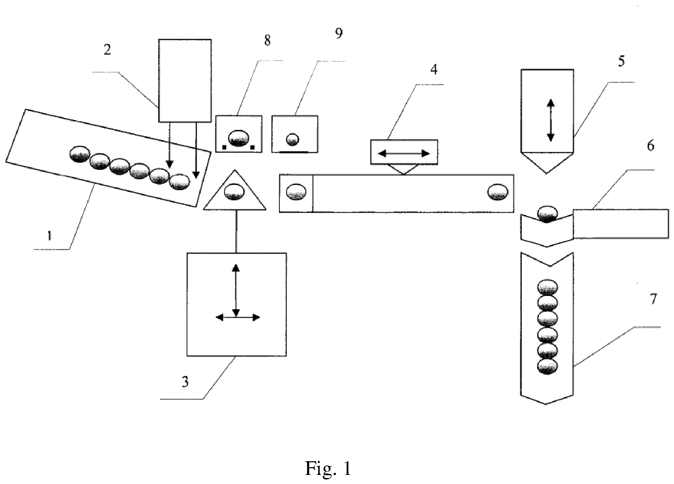

Fig. 1 shows a diagram of the device with its main components.

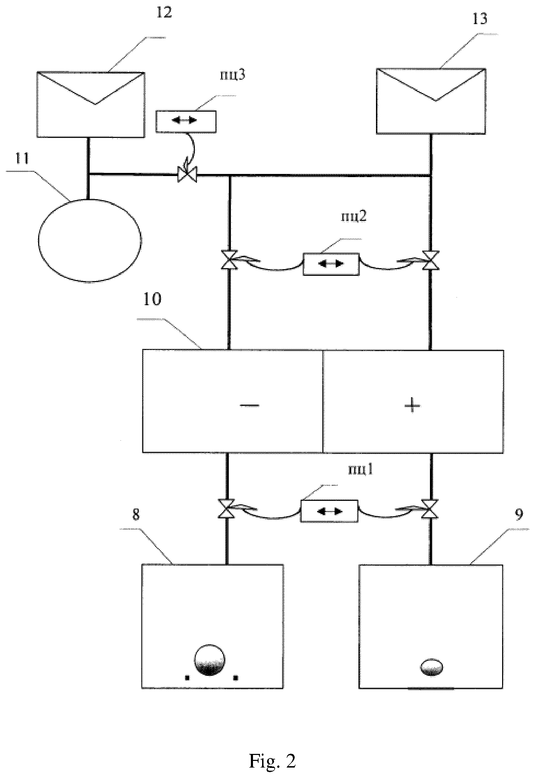

Fig. 2 shows the functional diagram of the volume measurement unit.

### IMPLEMENTATION OF THE INVENTION

Cylindrical articles (for example, fuel pellets) are manually stacked onto an entry collector 1, wherefrom they enter a cradle of a linear-turning mechanism 3 piece by piece, when a gate 2 opens. The linear-turning mechanism 3 feeds the article into a measuring chamber 8 of a volume measuring unit.

The volume measuring unit includes a measuring chamber 8 into which the article to be checked is loaded, and a reference chamber 9 permanently containing a reference article having a volume equal to a lower limit of the unit's volume measurement. The measuring and reference chambers are connected to the "minus" and "plus" cavities of a differential pressure transducer 10, respectively. In the reference pressure preparation chamber 12, a first reference pressure is created by the actuators, which enters the measurement and reference chambers. The chambers are closed by magnetic valves controlled by the pneumatic cylinder PC1. The pressure is controlled by an absolute pressure transducer 11. Then, a second reference pressure is created in the reference pressure preparation chamber 13, which fills the "minus" and "plus" cavities of the differential pressure transducer 10. The magnetic valves controlled by the pneumatic cylinder PC2 close the "minus" and "plus" cavities of the differential pressure transducer 10. Responding to a command from the controller, the pneumatic cylinder PC1 automatically opens the valves, connects the measuring chamber and the reference chamber to the "minus" and "plus" cavities of the differential pressure transducer 10, respectively. Since there is an article with a large volume in the measuring chamber, its free volume is less than the free volume of the reference chamber different pressures are created in the obtained closed systems: the measuring chamber 8 - the "minus" cavity of the differential pressure transducer 10, and the reference chamber 9 - the "plus" cavity of the differential pressure transducer 10. The resulting pressure difference is measured by the differential pressure transducer 10 and depends on the volume of the loaded article.

After measuring the volume, the magnetic valve controlled by the pneumatic cylinder PC3 opens, connecting the pneumatic system to the atmosphere and the linear-turning mechanism 3 removes the article from the measuring chamber and unloads it into the cradle of the lever-turning mechanism 4. The lever-turning mechanism 4 unloads the article on the prism of the scales 6, to measure the mass of the article. After measuring the mass, the expelling device 5 moves the article into the exit collector 7. Based on the results of measuring the mass and volume of the article, the control system (controller) calculates the density. Density-fitted inspected articles are returned to the batch to continue the production process for the manufacture of articles. Articles with a density deviation, as well as the entire batch of articles from which they were selected, are sent for rejection.

## Claims

1. Apparatus for checking the density of cylindrical articles, comprising, arranged in succession, an article loading unit, an article volume measuring unit, an article mass measuring unit, and an article unloading unit, wherein
the article loading unit comprises an entry collector and a gate, that opens to admit an article into the volume measuring unit,
the article volume measuring unit comprises a differential pressure transducer having two cavities, one of which is connected to a measuring chamber into which the article to be checked is loaded, and the other of which is connected to a reference chamber permanently containing a reference article, wherein each chamber is provided with a valve for opening and closing an entrance to the corresponding cavity of the differential pressure transducer,
the article mass measuring unit comprises a weighing device with a platform for receiving articles,
the article unloading unit comprises a device for expelling an article, and an exit collector into which the weighed articles are released.

2. Apparatus according to claim 1, wherein the articles enter to the volume measuring unit from the loading unit via a cradle using a linear-turning mechanism.

3. Apparatus according to claim 1, wherein the valves of the article volume measuring unit are magnetic and controlled by a pneumatic cylinder.

4. Apparatus according to claim 1, wherein the articles pass to the article mass measuring unit from the volume measuring unit via a cradle using a lever-turning mechanism.

5. Apparatus according to claim 1, wherein the weighing device of the apparatus comprises high-precision electronic scales.

6. Apparatus according to claim 1, wherein the expelling device comprises a pneumatic cylinder with a lever mounted on its rod.

7. Apparatus according to claim 1, wherein the entry collector is a container into which the articles are loaded before performing the check operation, and the exit collector is a container into which the checked articles get.

8. Apparatus according to claim 1, where the apparatus comprises a controller operating as a data management and processing system.
